# EUROPEAN PATENT SPECIFICATION

(11) **EP 1 819 131 B1**
(45) Date of publication and mention of the grant of the patent: **13.08.2008**
(21) Application number: 07101641.4
(22) Date of filing: 02.02.2007
(51) Int. Cl.: H04L 29/08

(54) **Method of and apparatus for managing distributed contents**
Verfahren und Gerät zur Verwaltung von verteilten Inhalten
Procédé et appareil pour gérer du contenu distribué

(30) Priority: 10.02.2006 KR 20060012884
(43) Date of publication of application: 15.08.2007
(73) Proprietor: Samsung Electronics Co., Ltd., Suwon-si, Gyeonggi-do 442-742 (KR)
(72) Inventor: Kang, Seong-hoon, Yeongtong-gu Suwon-si Gyeonggi-do (KR); Yoon, Seok-hyun, Seoul (KR); Ryu, Won-ho, Seoul (KR)
(74) Representative: Clark, David James

(56) References cited:
- EP-A- 1 530 113
- EP-A- 1 545 064
- KR-A- 20040 063 627
- US-A1- 2003 190 044
- US-A1- 2004 111 490

## Description

Methods and apparatuses consistent with the present invention relate to content management, and more particularly, to methods of and apparatus for managing distributed contents.

Audio visual (AV) devices for home networks are being widely used. Accordingly, the amount of AV contents created or used in these home networks has increased considerably.

Many contents in a home network are separately stored and used in corresponding devices. Such an environment is called a distributed content environment.

In a distributed content environment in the related art, users must know the locations of the devices in which the respective contents are stored. Also, some AV devices have limitations in their use of the contents. Accordingly, a method for allowing users to search for and use all the contents on a home network through any device is desired.

In a conventional technique, for example, Korean Laid-open Patent Publication No. 10-2004-0063627, entitled "Apparatus and Method for Displaying a Dispersed Multimedia Data List," all devices connected to a network are searched for when a user tries to use a device from among the devices, and, if the user selects a device, a multimedia data list stored in the selected device is displayed to the user so that the user can select and reproduce multimedia data of interest. In the conventional technique, a user command transmission or user selection is required in each step, and the user must know the device that stores the multimedia data to be reproduced. Furthermore, whenever a user tries to use the device, a device list, a content list, etc., must be aggregated again, which requires time.

A context sharing system, including a distribution server is disclosed in EP 1 530 113 (SONY).

Exemplary embodiments of the present invention aim to address the above disadvantages, and/or other disadvantages not described above.

According to a first aspect of the present invention, there is provided a method of managing distributed contents, comprising: aggregating information regarding contents stored in at least one content reproducing apparatus and creating or updating an integrated contents information database; and performing content synchronization to make contents-related data stored in the content reproducing apparatus conform to a synchronization list set by a user, using the integrated content information database.

According to a second aspect of the present invention, there is provided an apparatus for managing distributed contents, comprising: a contents information database (DB) processor operable to aggregate information regarding contents stored in at least one content reproducing apparatus and create or update an integrated contents information database; and a synchronization processor operable to perform content synchronization to make contents-related data stored in the content reproducing apparatus conform to a synchronization list set by a user, using the integrated content information database.

According to a third aspect of the invention, there is provided a computer readable recording medium having embodied thereon a computer program for executing a method according to the first aspect of the invention.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 illustrates an example of a home network using a distributed content management method according to an exemplary embodiment of the present invention;
FIGS. 2A and 2B illustrate contents-related data that are respectively stored in a distributed content management apparatus and a content reproducing apparatus, according to an exemplary embodiment of the present invention;
FIG. 3 is a block diagram of a distributed content management apparatus according to an exemplary embodiment of the present invention;
FIG. 4 is a view for explaining a process of a distributed content management method according to an exemplary embodiment of the present invention;
FIGS. 5A and 5B are views showing changes in contents-related data when content information aggregation is performed, according to an exemplary embodiment of the present invention;
FIG. 6 is a view for explaining another process of the distributed content management method according to an exemplary embodiment of the present invention;
FIG. 7 is a view for explaining a process for synchronizing play lists, according to an exemplary embodiment of the present invention;
FIG. 8 is a view for explaining a process for synchronizing content files, according to an exemplary embodiment of the present invention; and
FIGS. 9A and 9B are views showing changes in a metadata database (DB) when metadata data synchronization is performed.

The exemplary embodiments of the present invention will now be described more fully with reference to the accompanying drawings, in which exemplary embodiments of the invention are shown.

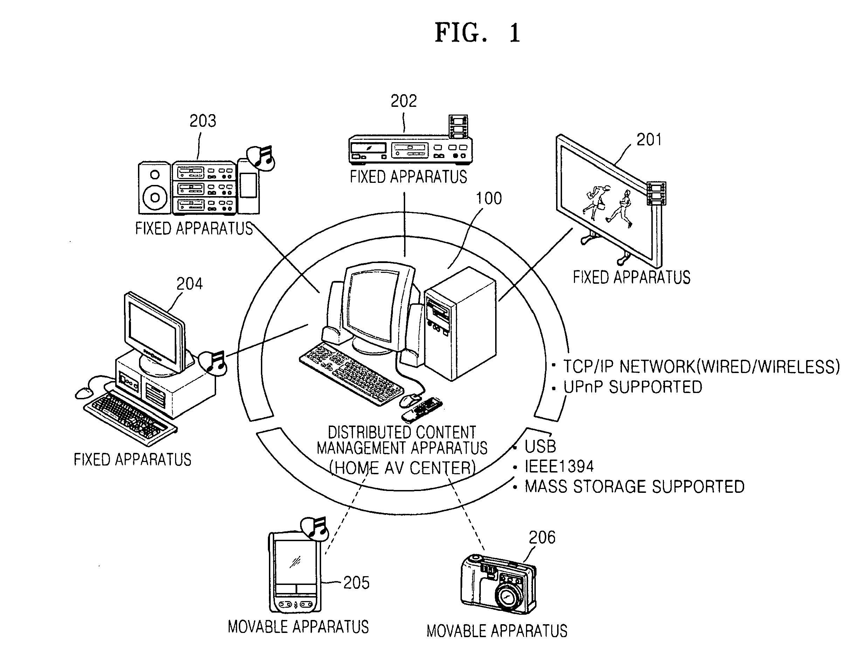

FIG. 1 illustrates an example of a home network using a distributed content management method according to an exemplary embodiment of the present invention is applied. Referring to FIG. 1, the home network includes a distributed content management apparatus 100 and one or more content reproducing apparatuses 201 through 206.

The content reproducing apparatuses 201 through 206 can be fixed devices, such as a digital TV 201, a personal video recorder (PVR) 202, a network audio 203, a personal computer (PC) 204, etc., and movable devices, such as a MP3 player 205, a digital camera 206, etc.

The fixed devices may, for example, be connected to the home network through a TCP/IP network-based LAN. The movable devices may, for example, be connected to the home network through a Universal Serial Bus (USB) or an interface based on the IEEE 1394 specification.

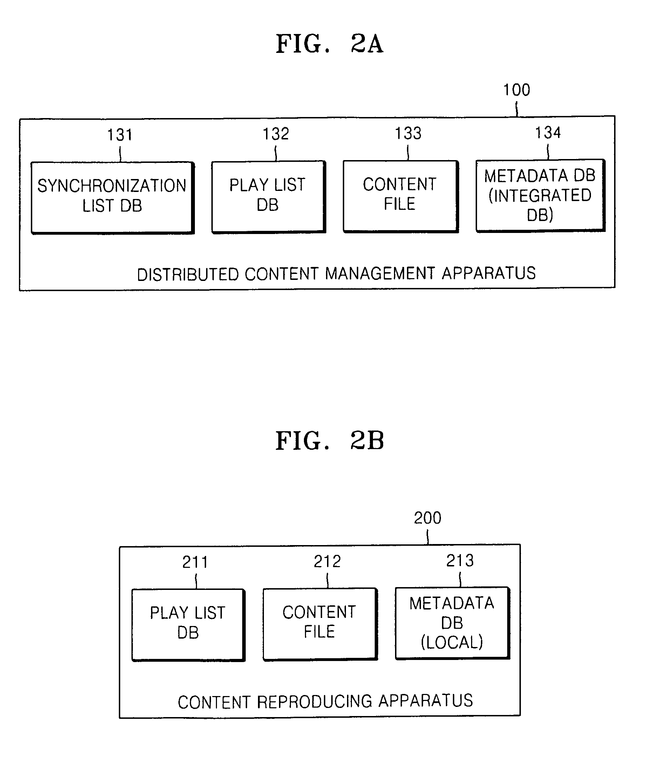

FIGS. 2A and 2B illustrate contents-related data that are respectively stored in the distributed content management apparatus 100 and a content reproducing apparatus 200.

Referring to FIG. 2A, the distributed content management apparatus 100 may store a synchronization list database (DB) 131, a play list DB 132, a content file 133, and a metadata DB 134 as contents-related data.

Referring to FIG. 2B, the content reproducing apparatus 200 may store a play list DB 211, a content file 212, and a metadata DB 213 as contents-related data.

The content files 133 and 212 contain contents which can be reproduced by the content reproducing apparatus 200. The content reproducing apparatus 200 stores its own content files 212, and the distributed content management apparatus 100 also stores its own content files 133.

The metadata DBs 134 and 213 store and manage metadata regarding the contents. The metadata can vary according to the type of the contents and the type of an application system. The metadata DB 213 in the content reproducing apparatus 200 stores information regarding its own content files, that is, information regarding local contents. Meanwhile, the metadata DB 134 in the distributed content management apparatus 100 stores information regarding content files stored in all content reproducing apparatuses connected to the home network, as well as a personal content file. Accordingly, the metadata DB 134 stored in the distributed content management apparatus 100 is an integrated content information DB.

The play list DBs 132 and 211 store play lists. A play list is a list of contents that a user wants to reproduce. The user may search for contents of interest whenever he or she wants to reproduce the contents. Alternatively, the user can choose in advance specific contents of interest from a play list, thereby omitting a search process.

The synchronization list DB 131, which is set to synchronize contents-related information with respect to the content reproducing apparatus 200, is stored in the distributed content management apparatus 100 and managed by the distributed content management apparatus 100. The synchronization list DB 131 includes play lists that the user sets for the respective apparatuses.

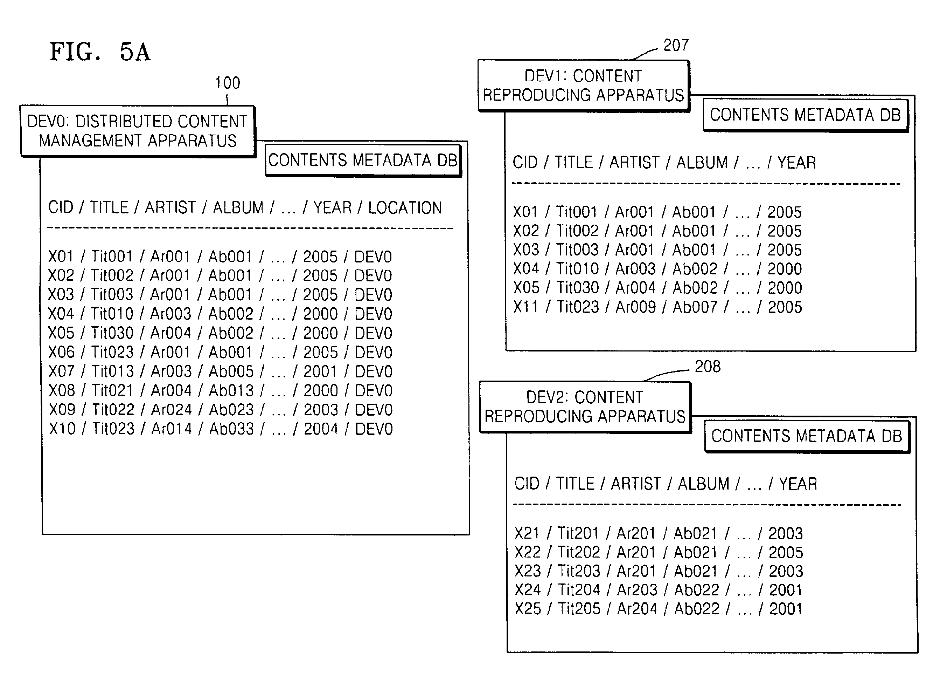

Detailed exemplary embodiments of the synchronization list DB 131, the play list DBs 132 and 211, and the metadata DBs 134 and 213 will be described later with respect to FIGS. 5A, 5B, 7, 8, 9A, and 9B.

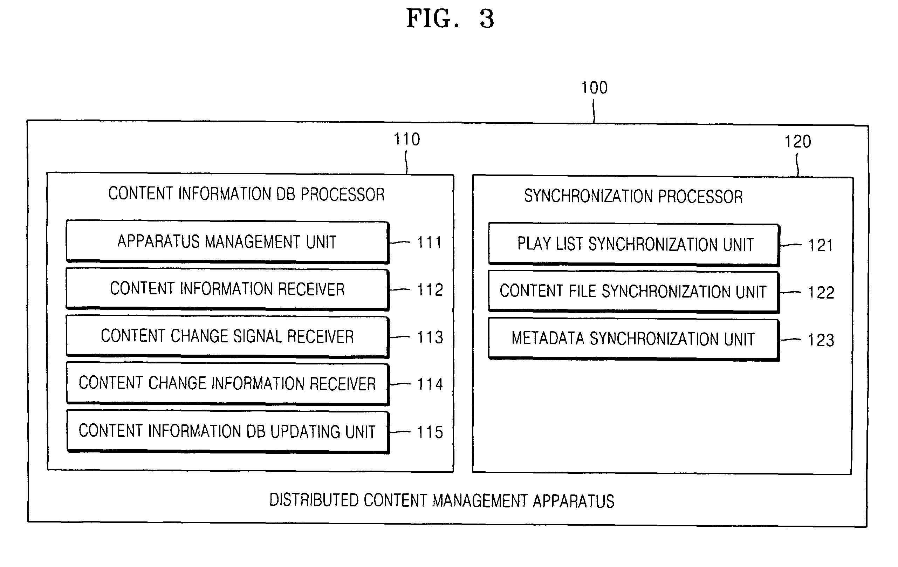

FIG. 3 is a block diagram of a distributed content management apparatus 100 according to an exemplary embodiment of the present invention. Referring to FIG. 3, the distributed content management apparatus 100 includes a content information DB processor 110 and a synchronization processor 120.

The content information DB processor 110 aggregates contents-related information stored in the content reproducing apparatus 200 (see FIG. 2B) on a home network and creates or updates an integrated content information DB. In order to perform this operation, the content information DB processor 110 includes an apparatus management unit 111, a content information receiver 112, a content change signal receiver 113, a content change information receiver 114, and a content information DB updating unit 115.

The apparatus management unit 111 registers and manages detailed information regarding content reproducing apparatuses (AV apparatuses) connected to the home network. If a content reproducing apparatus 200 is newly connected to the home network, the apparatus management unit 111 registers information regarding the content reproducing apparatus 200 newly connected. The information regarding the content reproducing apparatus 200 includes an identification (ID) of the content reproducing apparatus 200, the type of the content reproducing apparatus 200, a storage capacity of the content reproducing apparatus 200, etc.

The content information receiver 112 receives contents-related information from the content reproducing apparatus 200. If the content reproducing apparatus 200 is newly connected to the home network, the content information receiver 112 receives information regarding all contents stored in the content reproducing apparatus 200 from the content reproducing apparatus 200 newly connected.

If the information regarding the contents stored in the content reproducing apparatus 200 changes, the content reproducing apparatus 200 generates a content information change event and transfers it to the distributed content management apparatus 100. The content information change event is a signal for informing a user that the corresponding contents have changed.

The content change signal receiver 113 receives the content information change event from the content reproducing apparatus 200.

The content change information receiver 114 receives information regarding the changed contents from the content reproducing apparatus 200.

The content information DB updating unit 115 reflects the information regarding the changed contents and updates the integrated content information DB.

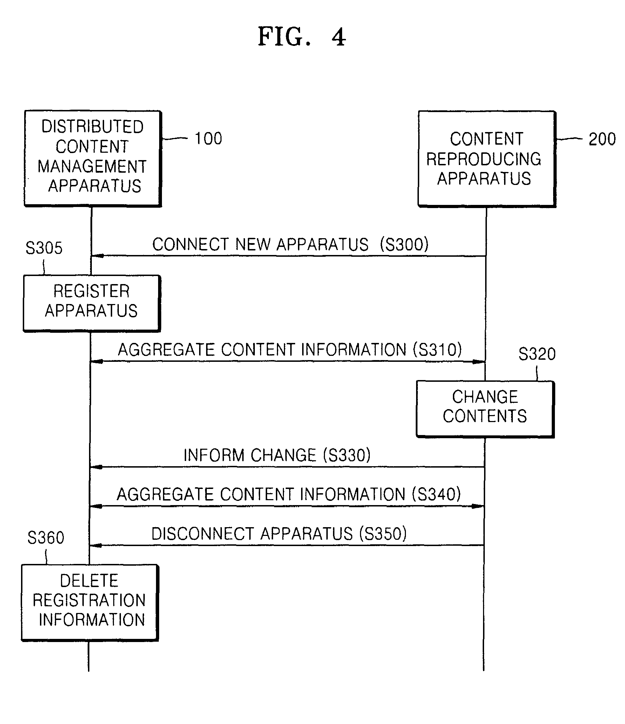

FIG. 4 is a view for explaining a process performed by a distributed content management method according to an exemplary embodiment of the present invention, wherein the content information DB processor 110 performs an operation of aggregating content information.

If a content reproducing apparatus 200 is newly connected to a home network, a message for informing that the content reproducing apparatus 200 is newly connected to the home network is transmitted (operation S300). Then, the distributed content management apparatus 100 registers information regarding the content reproducing apparatus 200 newly connected (operation S305).

After the information regarding the content reproducing apparatus 200 is registered, information regarding contents stored in the content reproducing apparatus 200 is aggregated (operation S310). The information regarding the contents includes a play list DB 211, a metadata DB 213, etc.

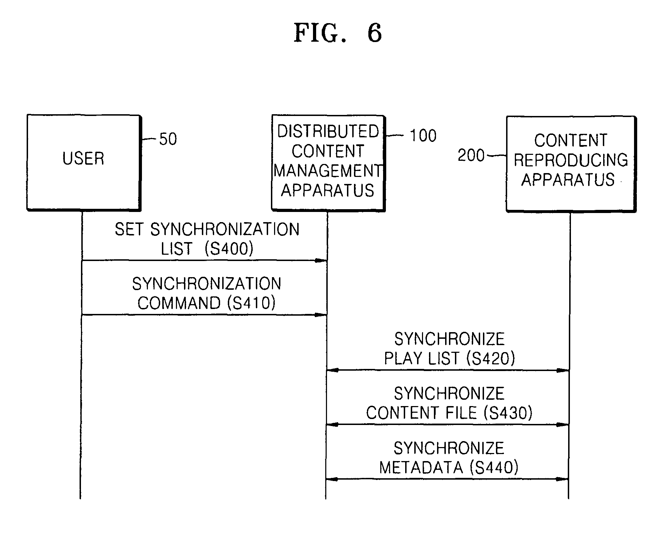

When the content information aggregation is completed, content synchronization is performed on the basis of the aggregated content information. The content synchronization will be described in detail later with reference to FIG. 6.

After the content reproducing apparatus 200 is connected to the home network, a change in the contents can occur (operation S320). For example, a new moving image may be recorded in a digital TV 201 (see FIG. 1) or a new picture may be created in a digital camera 206 (see FIG. 1).

If such a change in the contents stored in the content reproducing apparatus 200 occurs, the content reproducing apparatus 200 transmits a signal for informing the change in the contents to the distributed content management apparatus 100 (operation S330). If the content reproducing apparatus 200 receives the signal for informing the change in the contents, content information aggregation is again performed (operation S340). When content information is first aggregated, information regarding all contents stored in the content reproducing apparatus 200 is aggregated. However, if a change in the contents occurs, only information regarding the changed contents is aggregated.

After the content information aggregation according to the change in the contents is completed, content synchronization is performed according to the changed contents.

Also, a case where the content reproducing apparatus 200 is disconnected from the home network can occur. At this time, the content reproducing apparatus 200 transmits a signal about network disconnection to the content management apparatus 100 (operation S350). Then, the distributed content management apparatus 100 deletes the information regarding the content management apparatus 200 (operation S360).

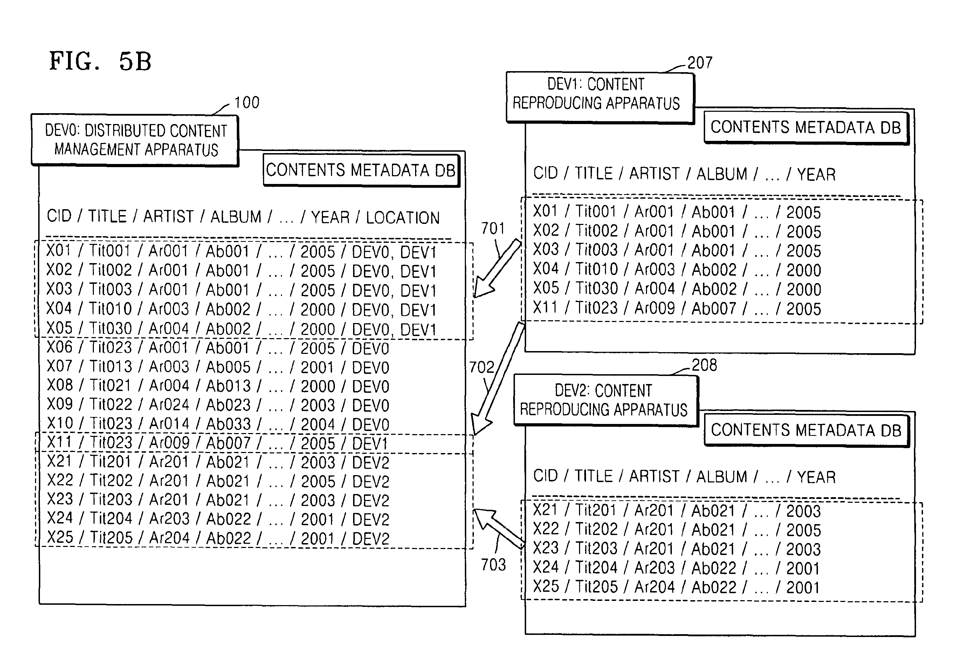

FIGS. 5A and 5B are views showing changes in contents-related data when content information aggregation is performed. FIG. 5A illustrates the state of contents-related data before content information is aggregated, and FIG. 5B illustrates the state of contents-related data after content information is aggregated.

Referring to FIGS. 5A and 5B, it is assumed that two content reproducing apparatuses 207 and 208 are connected to a network. In FIGS. 5A and 5B, the content reproducing apparatuses that are newly added are denoted by DEV1 and DEV2. The distributed content management apparatus 100 (see FIG. 3) is denoted by DEV0.

The content reproducing apparatus (DEV1) 207 stores contents X01, X02, X03, X04, X05, and X11 in a content metadata DB. In these drawings, CID represents a content ID.

Before content information aggregation is performed, information regarding content X01 is stored in advance in the content metadata DB of the distributed content management apparatus (DEV0) 100. However, the location of the content X01, that is, information regarding a content reproducing apparatus at which the content X01 is stored, is stored only in the distributed content management apparatus.

If the content information aggregation is performed, the contents-related information stored in the content reproducing apparatus (DEV1) 207 is transferred to the distributed content management apparatus (DEV0) 100 (operation 701 and 702). The distributed content management apparatus (DEV0) 100 reflects the received contents-related information and updates the content metadata DB. Referring to FIG. 5B, the location of the content X01 changes to the distributed content management apparatus (DEV0) 100 and the content reproducing apparatus (DEV1) 207.

Contents-related information stored in the content reproducing apparatus (DEV2) 208 is also transmitted to the distributed content management apparatus (DEV0) 100 (operation 703). Since contents X21, X22, X23, X24, and X25 stored in the content reproducing apparatus (DEV2) 208 are not registered in the distributed content management apparatus (DEV0) 100, the distributed content management apparatus (DEV0) 100 adds the contents X21, X22, X23, X24, and X25 to the content metadata DB (operation 703).

Referring to FIGS. 2A, 2B, and 3, the synchronization processor 120 performs content synchronization for making contents-related data stored in a content reproducing apparatus conform to a synchronization list 131 set by a user, using an integrated content information DB. In order to perform the content synchronization, the synchronization processor 120 includes a play list synchronization unit 121, a content file synchronization unit 122, and a metadata synchronization unit 123. FIG. 6 is a view for explaining a process performed by the distributed content management method according to an exemplary embodiment of the present invention. FIG. 6 illustrates an exemplary embodiment where the synchronization processor 120 performs content synchronization.

Referring to FIGS. 2A, 2B and 6, the play list synchronization unit 121 performs play list synchronization for making the content play list 211 stored in the content reproducing apparatus 200 conform to the synchronization list 131 (operation S420). In order to perform this operation, the play list synchronization unit 121 extracts a play list for the content reproducing apparatus 200 to be synchronized, using the synchronization list 131 including play lists for respective apparatuses, and transmits the extracted play list to the content reproducing apparatus 200.

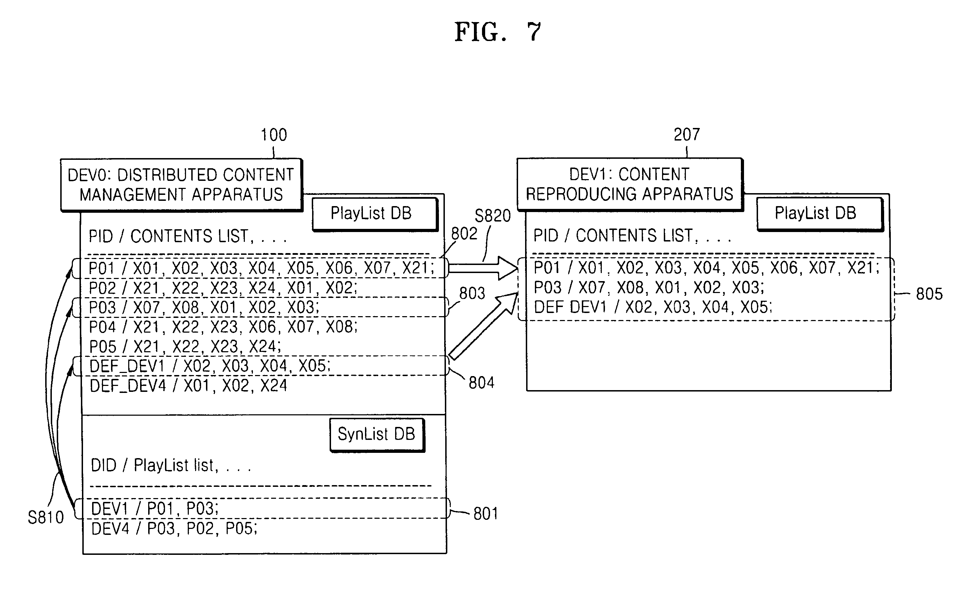

FIG. 7 is a view for explaining a process for synchronizing play lists according to an exemplary embodiment of the present invention. FIG. 7 illustrates an example in which content synchronization is performed with respect to the content reproducing apparatus (DEV1) 207 in which content information aggregation has been performed as described above with respect to FIGS. 5A and 5B.

Referring to FIGS. 2A, 2B, and 7, the play list synchronization unit 121 extracts play lists for the content reproducing apparatus (DEV1) 207 using a synchronization list (operation S810). The synchronization list designates play lists P01 (802) and P03 (803) as play lists for the content reproducing apparatus (DEV1) 207 (801). Also, FIG. 7 illustrates an exemplary embodiment where reference play lists are set to respective content reproducing apparatuses. In the current exemplary embodiment, a reference play list (DEF_DEV1) (804) is designated to the content reproducing apparatus (DEV1) 207.

The play list synchronization unit 121 transmits the extracted play lists P01, P03, and DEF_DEV1 (802, 803, and 804) to the content reproducing apparatus (DEV1) 207 (operation S820). Accordingly, the play lists P01, P03, and DEF_DEV1 are stored in a play list DB (805) of the content reproducing apparatus (DEV1) 207.

The content file synchronization unit 122 performs content file synchronization for making content files 212 stored in the content reproducing apparatus 200 conform to the synchronized play list (operation S430). The content file synchronization unit 122 extracts content files (that is, a list of contents which must be downloaded to the content reproducing apparatus 207) which are included in the synchronized play list and are not stored in the content reproducing apparatus (DEV1) 207 to be synchronized. In this specification, the content files are referred to as download content files.

The content file synchronization unit 122 transmits content files included in a list of the download content files to the content reproducing apparatus (DEV1) 207 to be synchronized.

First, the content file synchronization unit 122 determines whether the download content files are stored in the distributed content management apparatus 100. If a download content file is stored in the distributed content management apparatus 100, the content file synchronization unit 122 directly transmits the download content file stored in the distributed content management apparatus 100 to the content reproducing apparatus (DEV1) 207. If a download content file is not stored in the distributed content management apparatus 100, the content file synchronization unit 122 searches for a content reproducing apparatus in which the download content file is stored. The search operation can be easily performed using the content metadata DB 134. In this specification, the content reproducing apparatus in which the download content file is stored is referred to as a file storing content reproducing apparatus. The content file synchronization unit 122 transmits a file transfer message to the file storing content reproducing apparatus to make the download content file be directly transmitted to the content reproducing apparatus (DEV1) 207 in order to be synchronized. The file storing content reproducing apparatus receives the file transfer message and transmits the stored download content file to the content reproducing apparatus (DEV1) 207 to be synchronized.

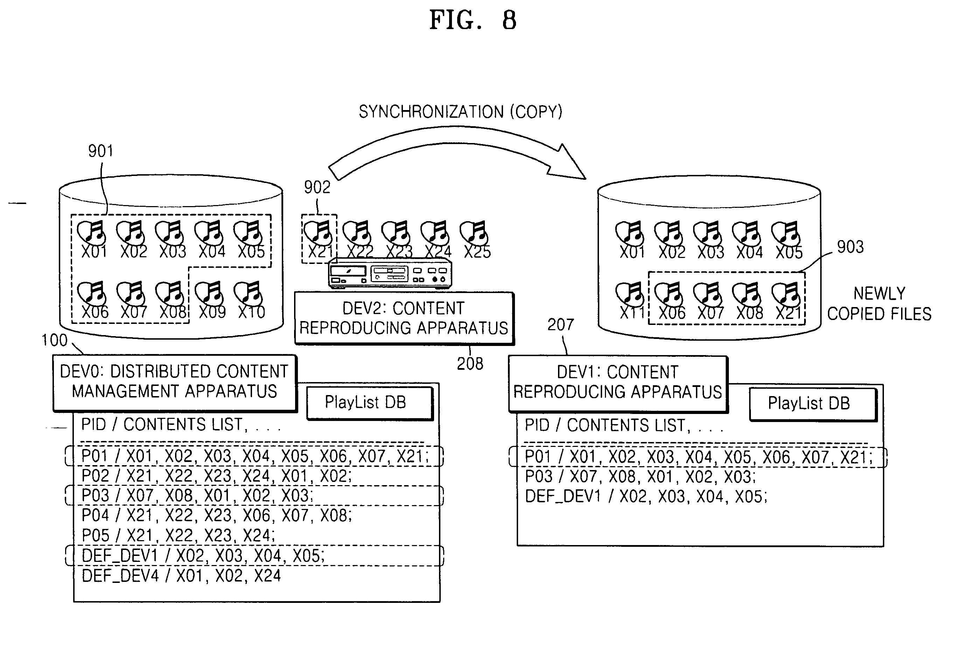

FIG. 8 is a view for explaining a process for synchronizing content files, according to an exemplary embodiment of the present invention. FIG. 8 illustrates an exemplary embodiment where content file synchronization is performed with respect to the content reproducing apparatus (DEV1) 207 after play list synchronization is performed as described above with reference to FIG. 7.

Referring to FIGS. 2A, 2B, and 8, first, the content file synchronization unit 122 extracts a list of content files to be downloaded. In the current exemplary embodiment, the content reproducing apparatus (DEV1) 207 stores content files X01 through X08 and X21. However, before synchronization is performed, the content reproducing apparatus (DEV1) 207 stores only the content files X01 through X05 and X11. Accordingly, the content files X06, X07, X08, and X21 (903) must be downloaded to the content reproducing apparatus (DEV1) 207.

The content file synchronization unit 122 determines whether the content files X06, X07, X08, and X21 to be downloaded are stored in the distributed content management apparatus (DEV0) 100. In the current exemplary embodiment, the distributed content management apparatus (DEV0) 100 stores the content files X06, X07, and X08, however, it does not store the content file X21. Accordingly, the content file synchronization unit 122 detects a file storing content reproducing apparatus in which the content file X21 is stored. Referring to FIG. 5B, the location of content metadata for the content file X21 is designated to a content reproducing apparatus (DEV2) 208. Accordingly, the file storing content reproducing apparatus in which the content file X21 is stored is decided as the content reproducing apparatus (DEV2) 208.

The content file synchronization unit 122 transmits a file transfer message to the content reproducing apparatus (DEV2) 208. The file transfer message causes the content reproducing apparatus (DEV2) 208 to directly transmit the content file X21 to the content reproducing apparatus (DEV1) 207. The content reproducing apparatus (DEV2) 208 receives the file transfer message and transmits the content file X21 (902) to the content reproducing apparatus (DEV1) 207.

Then, the metadata synchronization unit 123 performs metadata synchronization for reflecting the result of the content file synchronization to metadata 134 and 213 regarding a synchronized content file (operation S440). The metadata synchronization unit 123 adds a location where a download content file, that is, a location where the synchronized content file is newly stored, to metadata regarding download content files, and transfers the metadata to which the location is added to the content reproducing apparatus (DEV1) 207 to be synchronized. The content reproducing apparatus (DEV1) 207 adds the metadata to which the location is added to the metadata DB 213.

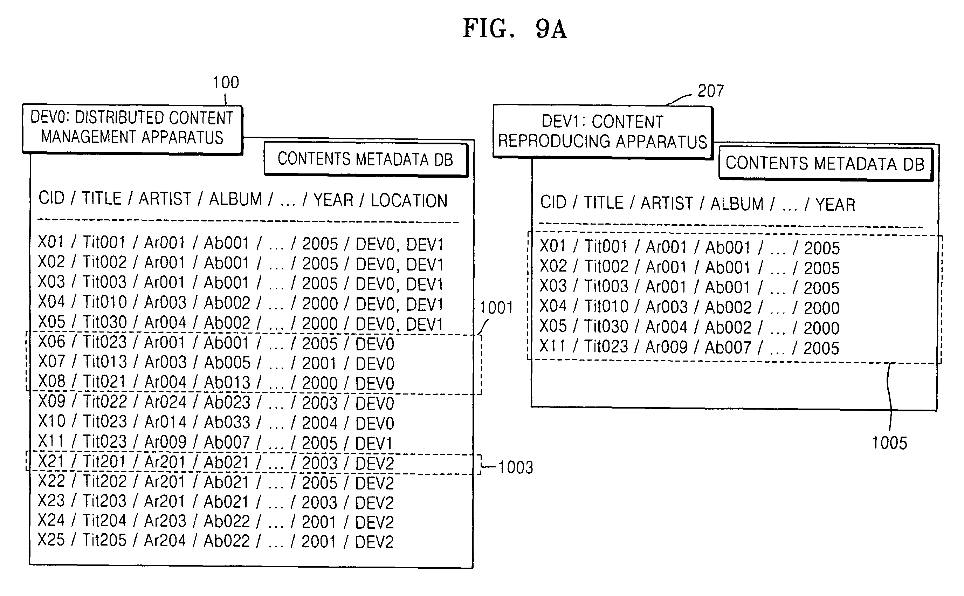

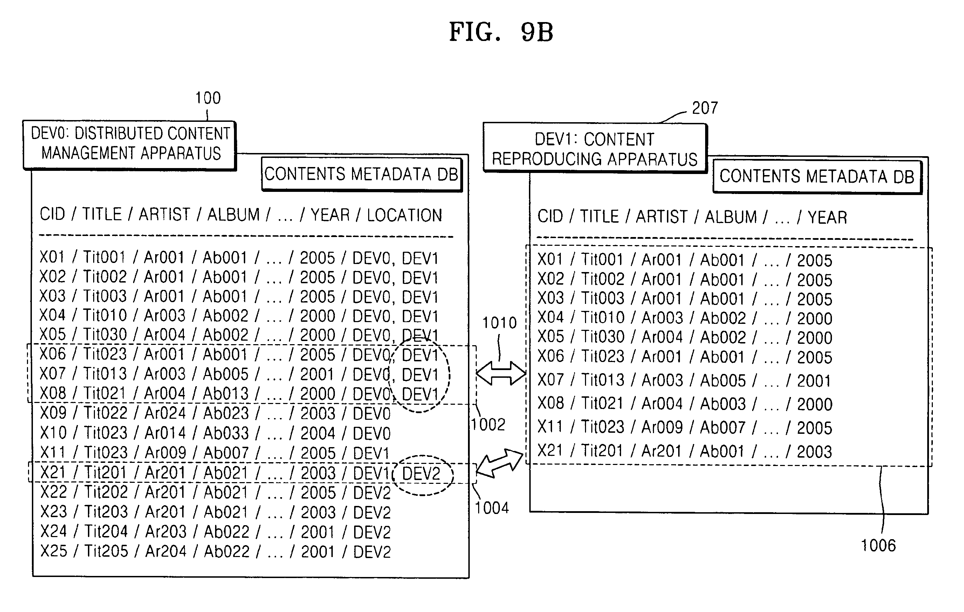

FIGS. 9A and 9B are views showing changes in the metadata DB 213 when metadata data synchronization is performed. FIGS. 9A and 9B illustrate an example of synchronizing metadata regarding the content reproducing apparatus (DEV1) 207 after content file synchronization is performed as described above with reference to FIG. 8.

FIG. 9A shows the state of the metadata DB 213 before metadata synchronization is performed. The metadata DB 213 illustrated in FIG. 9A has the same state as the metadata DB 213 illustrated in FIG. 5B. Accordingly, the location of the content files X06 through X08 is designated only to the DEV0 (1001), and the location of the content file X21 is designated only to the DEV2 (1003). Also, the metadata DB (1005) stored in the content reproducing apparatus (DEV1) 207 does not store information regarding the content files X06, X07, X08, and X21.

FIG. 9B illustrates the state of the metadata DB 213 after metadata synchronization (operation 1010) is performed. Here, the content reproducing apparatus (DEV1) 207 is added as the location of the content files X06 through X08 (1002) (operation 1010) and the content reproducing apparatus (DEV2) 208 is added as the location of the content file X21 (operation 1004). Also, the information of the content files X06, X07, X08, and X21 are stored in a metadata DB (1006) in the content reproducing apparatus (DEV1) 207.

The synchronization processor 120 performs content synchronization in the following case.

First, as described above with reference to FIG. 4, when content information is aggregated (operations S310 and S340 of FIG. 4), content synchronization is performed.

Also, when a synchronization command is received from a user, content synchronization is performed. A user 50 can change and newly set the synchronization list 131 (operation S400). If the synchronization list changes, the user 50 issues a synchronization command (operation S140) for making the distributed content management apparatus 100 perform content synchronization.

In a method and apparatus for managing distributed contents, according to the exemplary embodiment of the present invention, a change in contents information for each content reproducing apparatus is recorded as a log file, and a content information change event is generated when the content information changes.

A server (a content management apparatus) receives the content information change event, receives the changed information from the corresponding content reproducing apparatus, and updates a content information DB, thereby maintaining recent information. Accordingly, fast and effective management according to the changed contents may be possible.

Also, users can receive information regarding all reproducible contents on a home network from respective content reproducing apparatuses, and quickly receive and reproduce desired contents using the information.

The present invention may be embodied as a program stored on a computer readable medium that can be run on a general computer. Here, the computer readable medium includes but is not limited to storage media, such as ROMs, RAMs, CD-ROMs, magnetic tapes, floppy disks, optically readable media, etc., which store data readable by a computer system.

In a method and apparatus for managing distributed contents, according to the exemplary embodiments of the present invention, when content information stored in a content reproducing apparatus changes, the distributed content management apparatus receives the changed content information from the content reproducing apparatus, and updates a content information DB to maintain recent information, thereby allowing fast and effective management according to the changed contents. Also, uses may receive information regarding all reproducible contents on a home network from respective content reproducing apparatuses, and quickly receive and reproduce desired contents using the information.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for managing distributed contents, comprising:
aggregating information regarding contents stored in a content reproducing apparatus and creating or updating an integrated content information database; and
performing content synchronization to make contents-related data stored in the content reproducing apparatus conform to a synchronization list set by a user, using the integrated content information database.

2. The method of claim 1, wherein the creating or updating of the integrated content information database comprises:
registering information regarding the content reproducing apparatus, if the content reproducing apparatus is newly connected to a network; and
receiving the information regarding the contents stored in the content reproducing apparatus newly connected to the network from the content reproducing apparatus newly connected to the network.

3. The method of claim 2, wherein the registering the information regarding the content reproducing apparatus newly connected to the network comprises: storing an ID of the content reproducing apparatus, a type of the content reproducing apparatus, and a storage capacity of the content reproducing apparatus.

4. The method of claim 1, wherein the creating or updating the integrated content information database comprises:
receiving a signal for informing of changed contents from the content reproducing apparatus in which a change occurs, if the change occurs in the contents stored in the content reproducing apparatus;
receiving information regarding the changed contents from the content reproducing apparatus in which the change occurs; and
updating the integrated content information database to reflect the information regarding the changed contents.

5. The method of claim 4, wherein the content synchronization is performed when the signal for informing the change in the contents stored in the content reproducing apparatus is received from the content reproducing apparatus.

6. The method of any preceding claim, wherein the content synchronization is performed when a synchronization command is received from the user.

7. The method of any preceding claim, wherein the performing of the content synchronization comprises:
performing play list synchronization to make content play lists stored in the content reproducing apparatus conform to the synchronization list;
performing content file synchronization to make content files stored in the content reproducing apparatus conform to a synchronized play list; and
performing metadata synchronization to reflects a result of the content file synchronization in metadata regarding the synchronized content file.

8. The method of claim 7, wherein the performing of the play list synchronization comprises:
extracting a play list for a content reproducing apparatus to be synchronized, using the synchronization list including play lists from respective apparatuses; and
transmitting the extracted play list to the content reproducing apparatus to be synchronized.

9. The method of claim 7 or 8, wherein the performing of the content file synchronization comprises:
extracting a list of download content files which are included in the synchronized play list and are not stored in the content reproducing apparatus to be synchronized; and
transmitting content files included in the list of the download content files to the content reproducing apparatus to be synchronized.

10. The method of claim 9, wherein the transmitting of the content files included in the list of the download content files to the content reproducing apparatus to be synchronized comprises:
determining whether the content files included in the list of the download content files are stored in the distributed content management apparatus;
detecting a file storing content reproducing apparatus which stores the content files not stored in the distributed content management apparatus among the download content files; and
transmitting a message to make the file storing content reproducing apparatus directly transmit the content files to the content reproducing apparatus to be synchronized.

11. The method of claim 7, 8, 9 or 10, wherein the synchronizing of the metadata comprises:
adding a location where the synchronized content file is newly stored to metadata for the synchronized content file; and
transmitting the metadata where the location is added to the content reproducing apparatus to be synchronized.

12. The method of any preceding claim, wherein, if the information regarding the contents stored in the content reproducing apparatus changes, the content reproducing apparatus generates a content information change event.

13. An apparatus for managing distributed contents, comprising:
a content information database (DB) processor (110) which aggregates information regarding contents stored in a content reproducing apparatus and creates or updates an integrated content information database; and
a synchronization processor (120) which performs content synchronization to make contents-related data stored in the content reproducing apparatus conform to a synchronization list set by a user, using the integrated content information database.

14. The apparatus of claim 13, wherein the content information DB processor (110) comprises:
an apparatus management unit (111) which registers information regarding the content reproducing apparatus if the content reproducing apparatus is newly connected to a network; and
a content information receiver (112) which receives the information regarding contents stored in the content reproducing apparatus from the content reproducing apparatus if the content reproducing apparatus is newly connected to the network.

15. The apparatus of claim 13 or 14, wherein the content information DB processor (110) comprises:
a content change signal receiver (113) which receives a signal which informs of a change in the contents from the content reproducing apparatus in which the change occurs;
a content change information receiver (114) which receives information regarding changed contents from the content reproducing apparatus in which the change occurs; and
a content information DB updating unit (115) which updates the integrated content information database reflecting the information regarding the changed contents.

16. The apparatus of claim 13, 14 or 15, wherein the content reproducing apparatus is a fixed content reproducing apparatus or a movable content reproducing apparatus.

17. The apparatus of claim 16, wherein, if the content reproducing apparatus is the fixed content reproducing apparatus, the content reproducing apparatus is connected to a network through a TCP/IP based LAN.

18. The apparatus of claim 16, wherein, if the content reproducing apparatus is the movable content reproducing apparatus, the content reproducing apparatus is connected to a network through a Universal Serial Bus (USB) or an interface based on an IEEE 1394 specification.

19. The apparatus of any one of claims 13-18, wherein the synchronization processor (120) comprises:
a play list synchronization unit (121) which performs play list synchronization to make content play lists stored in the content reproducing apparatus conform to the synchronization list;
a content file synchronization unit (122) which performs content file synchronization to make content files stored in the content reproducing apparatus conform to the synchronized play list; and
a metadata synchronization unit (123) which performs metadata synchronization to reflect a result of the content file synchronization in metadata regarding the synchronized content file.

20. The apparatus of claim 19, wherein the play list synchronization unit (121) comprises:
a play list extracting unit which extracts a play list for the content reproducing apparatus to be synchronized, using the synchronization list including play lists for respective apparatuses; and
a play list transmitting unit which transmits the extracted play list to the content reproducing unit to be synchronized.

21. The apparatus of claim 19 or 20, wherein the content file synchronization unit (121) comprises:
a download content file list extracting unit which extracts a list of download content files which are included in the synchronized play list and are not stored in the content reproducing apparatus to be synchronized; and
a download content file transmitting unit which transmits the content files included in the list of the download content files to the content reproducing apparatus to be synchronized.

22. The apparatus of claim 21, wherein the download content file transmitting unit comprises:
a determining unit which determines whether the content files included in the list of the download content files are stored in the distributed content management apparatus;
a detecting unit which detects an other content reproducing apparatus storing the download content files which are not stored in the distributed content management unit among the download content files; and
a file transfer message transmitting unit which transmits a message to make the other content reproducing apparatus directly transmit the download content files to the content reproducing apparatus to be synchronized.

23. The apparatus of any one of claims 19-22, wherein the metadata synchronization unit (123) comprising:
a metadata adding unit which adds a location where the synchronized content file is newly stored to metadata for the synchronized content file; and
a metadata transmitting unit which transmits the metadata where the location is added to the content reproducing apparatus to be synchronized.

24. A computer readable recording medium having embodied thereon a computer program for executing a method comprising:
aggregating information regarding contents stored in a content reproducing apparatus and creating or updating an integrated content information database; and
performing content synchronization for making contents-related data stored in the content reproducing apparatus conform to a synchronization list set by a user, using the integrated content information database.

## Patentansprüche

1. Verfahren zum Verwalten verteilter Inhalte, umfassend:
Sammeln von Informationen in Bezug auf Inhalte, die in einer Inhaltswiedergabevorrichtung gespeichert sind, und Erzeugen oder Aktualisieren einer integrierten Inhaltsinformationsdatenbank; und
Durchführen von Inhaltssynchronisierung, um inhaltsbezogene Daten, die in der Inhaltswiedergabevorrichtung gespeichert sind, unter Verwendung der integrierten Inhaltsinformationsdatenbank mit einer Synchronisierungsliste, die von einem Benutzer eingestellt wurde, in Übereinstimmung zu bringen.

2. Verfahren nach Anspruch 1, wobei das Erzeugen oder Aktualisieren der integrierten Inhaltsinformationsdatenbank umfasst:
Registrieren von Informationen in Bezug auf die Inhaltswiedergabevorrichtung, wenn die Inhaltswiedergabevorrichtung neu mit einem Netzwerk verbunden wird; und
Empfangen der Informationen in Bezug auf die Inhalte, die in der neu mit dem Netzwerk verbundenen Inhaltswiedergabevorrichtung gespeichert sind, von der neu mit dem Netzwerk verbundenen Inhaltswiedergabevorrichtung.

3. Verfahren nach Anspruch 2, wobei das Registrieren der Informationen in Bezug auf die neu mit dem Netzwerk verbundene Inhaltswiedergabevorrichtung umfasst: Speichern einer Kennung der Inhaltswiedergabevorrichtung, eines Typs der Inhaltswiedergabevorrichtung und einer Speicherkapazität der Inhaltswiedergabevorrichtung.

4. Verfahren nach Anspruch 1, wobei das Erzeugen oder Aktualisieren der integrierten Inhaltsinformationsdatenbank umfasst:
Empfangen eines Signals zum Mitteilen geänderter Inhalte von der Inhaltswiedergabevorrichtung, bei der eine Änderung auftritt, wenn die Änderung bei den Inhalten auftritt, die in der Inhaltswiedergabevorrichtung gespeichert sind;
Empfangen von Informationen in Bezug auf die geänderten Inhalte von der Inhaltswiedergabevorrichtung, bei der die Änderung auftritt; und
Aktualisieren der integrierten Inhaltsinformationsdatenbank, um die Informationen in Bezug auf die geänderten Inhalte widerzuspiegeln.

5. Verfahren nach Anspruch 4, wobei die Inhaltssynchronisierung durchgeführt wird, wenn das Signal zum Mitteilen der Änderung bei den Inhalten, die in der Inhaltswiedergabevorrichtung gespeichert sind, von der Inhaltswiedergabevorrichtung empfangen wird.

6. Verfahren nach einem der vorhergehenden Ansprüche, wobei die Inhaltssynchronisierung durchgeführt wird, wenn ein Synchronisierungsbefehl von dem Benutzer empfangen wird.

7. Verfahren nach einem der vorhergehenden Ansprüche, wobei das Durchführen der Inhaltssynchronisierung umfasst:
Durchführen von Abspiellistensynchronisierung, um Inhaltsabspiellisten, die in der Inhaltswiedergabevorrichtung gespeichert sind, mit der Synchronisierungsliste in Übereinstimmung zu bringen;
Durchführen von Inhaltsdateisynchronisierung, um Inhaltsdateien, die in der Inhaltswiedergabevorrichtung gespeichert sind, mit einer synchronisierten Abspielliste in Übereinstimmung zu bringen; und
Durchführen von Metadatensynchronisierung, um ein Ergebnis der Inhaltsdateisynchronisierung in Metadaten in Bezug auf die synchronisierte Inhaltsdatei widerzuspiegeln.

8. Verfahren nach Anspruch 7, wobei das Durchführen der Abspiellistensynchronisierung umfasst:
Extrahieren einer Abspielliste für eine zu synchronisierende Inhaltswiedergabevorrichtung unter Verwendung der Synchronisierungsliste, die Abspiellisten von jeweiligen Vorrichtungen enthält; und
Senden der extrahierten Abspielliste an die zu synchronisierende Inhaltswiedergabevorrichtung.

9. Verfahren nach Anspruch 7 oder 8, wobei das Durchführen der Inhaltsdateisynchronisierung umfasst:
Extrahieren einer Liste von Herunterlade-Inhaltsdateien, die in der synchronisierten Abspielliste enthalten sind und nicht in der zu synchronisierenden Inhaltswiedergabevorrichtung gespeichert sind; und
Senden von Inhaltsdateien, die in der Liste der Herunterlade-Inhaltsdateien enthalten sind, an die zu synchronisierende Inhaltswiedergabevorrichtung.

10. Verfahren nach Anspruch 9, wobei das Senden der Inhaltsdateien, die in der Liste der Herunterlade-Inhaltsdateien enthalten sind, an die zu synchronisierende Inhaltswiedergabevorrichtung umfasst:
Bestimmen, ob die Inhaltsdateien, die in der Liste der Herunterlade-Inhaltsdateien enthalten sind, in der Vorrichtung zum Verwalten verteilten Inhalts gespeichert sind;
Erfassen einer dateispeichernden Inhaltswiedergabevorrichtung, die die Inhaltsdateien, die nicht in der Vorrichtung zum Verwalten verteilten Inhalts gespeichert sind, unter den Herunterlade-Inhaltsdateien speichert; und
Senden einer Nachricht, um die dateispeichernde Inhaltswiedergabevorrichtung zu veranlassen, die Inhaltsdateien direkt an die zu synchronisierende Inhaltswiedergabevorrichtung zu senden.

11. Verfahren nach Anspruch 7, 8, 9 oder 10, wobei das Synchronisieren der Metadaten umfasst:
Hinzufügen einer Position, an der die synchronisierte Inhaltsdatei neu gespeichert wird, zu Metadaten für die synchronisierte Inhaltsdatei; und
Senden der Metadaten, bei denen die Position hinzugefügt ist, an die zu synchronisierende Inhaltswiedergabevorrichtung.

12. Verfahren nach einem der vorhergehenden Ansprüche, wobei, wenn sich die Informationen in Bezug auf die in der Inhaltswiedergabevorrichtung gespeicherten Inhalte ändern, die Inhaltswiedergabevorrichtung ein Inhaltsinformationsänderungsereignis erzeugt.

13. Vorrichtung zum Verwalten verteilter Inhalte, umfassend:
eine Inhaltsinformationsdatenbank-Verarbeitungseinrichtung (110), die Informationen in Bezug auf Inhalte, die in einer Inhaltswiedergabevorrichtung gespeichert sind, sammelt und eine integrierte Inhaltsinformationsdatenbank erzeugt oder aktualisiert; und
eine Synchronisierungs-Verarbeitungseinrichtung (120), die Inhaltssynchronisierung durchführt, um inhaltsbezogene Daten, die in der Inhaltswiedergabevorrichtung gespeichert sind, unter Verwendung der integrierten Inhaltsinformationsdatenbank mit einer Synchronisierungsliste, die von einem Benutzer eingestellt wurde, in Übereinstimmung zu bringen.

14. Verfahren nach Anspruch 13, wobei die Inhaltsinformationsdatenbank-Verarbeitungseinrichtung (110) umfasst:
eine Vorrichtungsverwaltungseinheit (111), die Informationen in Bezug auf die Inhaltswiedergabevorrichtung registriert, wenn die Inhaltswiedergabevorrichtung neu mit einem Netzwerk verbunden wird; und
einen Inhaltsinformationsempfänger (112), der die Informationen in Bezug auf Inhalte, die in der Inhaltswiedergabevorrichtung gespeichert sind, von der Inhaltswiedergabevorrichtung empfängt, wenn die Inhaltswiedergabevorrichtung neu mit dem Netzwerk verbunden ist.

15. Vorrichtung nach Anspruch 13 oder 14, wobei die Inhaltsinformationsdatenbank-Verarbeitungseinrichtung (110) umfasst:
einen Inhaltsänderungssignalempfänger (113), der ein Signal, das eine Änderung bei den Inhalten mitteilt, von der Inhaltswiedergabevorrichtung empfängt, bei der die Änderung auftritt;
einen Inhaltsänderungsinformationsempfänger (114), der Informationen in Bezug auf geänderte Inhalte von der Inhaltswiedergabevorrichtung empfängt, bei der die Änderung auftritt; und
eine Inhaltsinformationsdatenbank-Aktualisierungseinheit (115), die die integrierte Inhaltsinformationsdatenbank aktualisiert, wobei dies die Informationen in Bezug auf die geänderten Inhalte widerspiegelt.

16. Vorrichtung nach Anspruch 13, 14 oder 15, wobei die Inhaltswiedergabevorrichtung eine feste Inhaltswiedergabevorrichtung oder eine bewegliche Inhaltswiedergabevorrichtung ist.

17. Vorrichtung nach Anspruch 16, wobei, wenn die Inhaltswiedergabevorrichtung die feste Inhaltswiedergabevorrichtung ist, die Inhaltswiedergabevorrichtung über ein TCP/IP-basiertes lokales Netzwerk (LAN) mit einem Netzwerk verbunden wird.

18. Vorrichtung nach Anspruch 16, wobei, wenn die Inhaltswiedergabevorrichtung die bewegliche Inhaltswiedergabevorrichtung ist, die Inhaltswiedergabevorrichtung über einen universalen seriellen Bus (USB) oder eine Schnittstelle auf Basis einer IEEE 1394-Spezifikation mit einem Netzwerk verbunden wird.

19. Vorrichtung nach einem der Ansprüche 13 bis 18, wobei die Synchronisierungs-Verarbeitungseinrichtung (120) umfasst:
eine Abspiellistensynchronisierungseinheit (121), die Abspiellistensynchronisierung durchführt, um Inhaltsabspiellisten, die in der Inhaltswiedergabevorrichtung gespeichert sind, mit der Synchronisierungsliste in Übereinstimmung zu bringen;
eine Inhaltsdateisynchronisierungseinheit (122), die Inhaltsdateisynchronisierung durchführt, um Inhaltsdateien, die in der Inhaltswiedergabevorrichtung gespeichert sind, mit der synchronisierten Abspielliste in Übereinstimmung zu bringen; und
eine Metadatensynchronisierungseinheit (123), die Metadatensynchronisierung durchführt, um ein Ergebnis der Inhaltsdateisynchronisierung in Metadaten in Bezug auf die synchronisierte Inhaltsdatei widerzuspiegeln.

20. Vorrichtung nach Anspruch 19, wobei die Abspiellistensynchronisierungseinheit (121) umfasst:
eine Abspiellistenextrahiereinheit, die eine Abspielliste für die zu synchronisierende Inhaltswiedergabevorrichtung unter Verwendung der Synchronisierungsliste, die Abspiellisten für jeweilige Vorrichtungen enthält, extrahiert; und
eine Abspiellistensendeeinheit, die die extrahierte Abspielliste an die zu synchronisierende Inhaltswiedergabeeinheit sendet.

21. Vorrichtung nach Anspruch 19 oder 20, wobei die Inhaltsdateisynchronisierungseinheit (121) umfasst:
eine Herunterlade-Inhaltsdateilisten-Extrahiereinheit, die eine Liste von Herunterlade-Inhaltsdateien extrahiert, die in der synchronisierten Abspielliste enthalten sind und nicht in der zu synchronisierenden Inhaltswiedergabevorrichtung gespeichert sind; und
eine Herunterlade-Inhaltsdatei-Sendeeinheit, die die Inhaltsdateien, die in der Liste der Herunterlade-Inhaltsdateien enthalten sind, an die zu synchronisierende Inhaltswiedergabevorrichtung sendet.

22. Vorrichtung nach Anspruch 21, wobei die Herunterlade-Inhaltsdatei-Sendeeinheit umfasst:
eine Bestimmungseinheit, die bestimmt, ob die Inhaltsdateien, die in der Liste der Herunterlade-Inhaltsdateien enthalten sind, in der Vorrichtung zum Verwalten verteilten Inhalts gespeichert sind;
eine Erfassungseinheit, die eine andere Inhaltswiedergabeeinheit erfasst, die die Herunterlade-Inhaltsdateien, die nicht in der Einheit zum Verwalten verteilten Inhalts gespeichert sind, unter den Herunterlade-Inhaltsdateien speichert; und
eine Dateitransfernachricht-Sendeeinheit, die eine Nachricht sendet, um die andere Inhaltswiedergabevorrichtung zu veranlassen, die Herunterlade-Inhaltsdateien direkt an die zu synchronisierende Inhaltswiedergabevorrichtung zu senden.

23. Vorrichtung nach einem der Ansprüche 19 bis 22, wobei die Metadatensynchronisierungseinheit (123) umfasst:
eine Metadaten-Addiereinheit, die eine Position, an der die synchronisierte Inhaltsdatei neu gespeichert wird, zu Metadaten für die synchronisierte Inhaltsdatei hinzufügt; und
eine Metadatensendeeinheit, die die Metadaten, bei denen die Position hinzugefügt ist, an die zu synchronisierende Inhaltswiedergabevorrichtung sendet.

24. Computerlesbares Aufzeichnungsmedium, in das ein Computerprogramm zum Ausführen eines Verfahrens integriert ist, das umfasst:
Sammeln von Informationen in Bezug auf Inhalte, die in einer Inhaltswiedergabevorrichtung gespeichert sind, und Erzeugen oder Aktualisieren einer integrierten Inhaltsinformationsdatenbank; und
Durchführen von Inhaltssynchronisierung, um inhaltsbezogene Daten, die in der Inhaltswiedergabevorrichtung gespeichert sind, unter Verwendung der integrierten Inhaltsinformationsdatenbank mit einer Synchronisierungsliste, die von einem Benutzer eingestellt wurde, in Übereinstimmung zu bringen.

## Revendications

1. Procédé pour gérer des contenus distribués comprenant les étapes consistant à :
rassembler des informations concernant des contenus stockés dans un appareil de reproduction de contenu et créer ou mettre à jour une base de données d'informations de contenu intégrée ; et
procéder à une synchronisation de contenu pour rendre les données concernant les contenus stockées dans l'appareil de reproduction de contenu conformes à une liste de synchronisation définie par un utilisateur, à l'aide de la base de données d'informations de contenu intégrée.

2. Procédé selon la revendication 1, dans lequel la création ou la mise à jour de la base de données d'informations de contenu intégrée comprend les étapes consistant à :
enregistrer des informations concernant l'appareil de reproduction de contenu, si l'appareil de reproduction de contenu est nouvellement connecté à un réseau ; et
recevoir les informations concernant les contenus stockés dans l'appareil de reproduction de contenu nouvellement connecté au réseau depuis l'appareil de reproduction de contenu nouvellement connecté au réseau.

3. Procédé selon la revendication 2, dans lequel l'enregistrement des informations concernant l'appareil de reproduction de contenu nouvellement connecté au réseau comprend l'étape consistant à : stocker un identifiant de l'appareil de reproduction de contenu, un type de l'appareil de reproduction de contenu et une capacité de stockage de l'appareil de reproduction de contenu.

4. Procédé selon la revendication 1, dans lequel la création ou la mise à jour de la base de données d'informations de contenu intégrée comprennent les étapes consistant à :
recevoir un signal pour informer des contenus changés depuis l'appareil de reproduction de contenu dans lequel un changement se produit, si le changement se produit dans les contenus stockés dans l'appareil de reproduction de contenu ;
recevoir des informations concernant les contenus changés depuis l'appareil de reproduction de contenu dans lequel le changement se produit ; et
mettre à jour la base de données d'informations de contenu intégrée pour refléter les informations concernant les contenus changés.

5. Procédé selon la revendication 4, dans lequel la synchronisation de contenu est effectuée lorsque le signal pour informer du changement dans les contenus stockés dans l'appareil de reproduction de contenu est reçu depuis l'appareil de reproduction de contenu.

6. Procédé selon l'une quelconque des revendications précédentes, dans lequel la synchronisation de contenu est effectuée lorsqu'une commande de synchronisation est reçue depuis l'utilisateur.

7. Procédé selon l'une quelconque des revendications précédentes, dans lequel l'exécution de la synchronisation du contenu comprend les étapes consistant à :
procéder à une synchronisation de liste de lecture pour rendre les listes de lecture de contenu stockées dans l'appareil de reproduction de contenu conformes à la liste de synchronisation ;
procéder à une synchronisation de fichier de contenu pour rendre les fichiers de contenu stockés dans l'appareil de reproduction de contenu conformes à une liste de lecture synchronisée ; et
procéder à une synchronisation de métadonnées pour refléter un résultat de la synchronisation du fichier de contenu dans les métadonnées concernant le fichier de contenu synchronisé.

8. Procédé selon la revendication 7, dans lequel l'exécution de la synchronisation de la liste de lecture comprend les étapes consistant à :
extraire une liste de lecture pour un appareil de reproduction de contenu à synchroniser, à l'aide de la liste de synchronisation comprenant des listes de lecture provenant des appareils respectifs ; et
transmettre la liste de lecture extraite à l'appareil de reproduction de contenu à synchroniser.

9. Procédé selon la revendication 7 ou la revendication 8, dans lequel l'exécution de la synchronisation du fichier de contenu comprend les étapes consistant à :
extraire une liste de fichiers de contenu téléchargés qui sont compris dans la liste de lecture synchronisée et qui ne sont pas stockés dans l'appareil de reproduction de contenu à synchroniser ; et
transmettre les fichiers de contenu inclus dans la liste des fichiers de contenu téléchargés à l'appareil de reproduction de contenu à synchroniser.

10. Procédé selon la revendication 9, dans lequel la transmission des fichiers de contenu inclus dans la liste des fichiers de contenu téléchargés à l'appareil de reproduction de contenu à synchroniser comprend les étapes consistant à :
déterminer si les fichiers de contenu inclus dans la liste de fichiers de contenu téléchargés sont stockés dans l'appareil de gestion de contenu distribué ;
détecter un fichier stockant un appareil de reproduction de contenu qui stocke les fichiers de contenu non stockés dans l'appareil de gestion de contenu distribué parmi les fichiers de contenu téléchargés ; et
transmettre un message pour faire que le fichier stockant l'appareil de reproduction de contenu transmette directement les fichiers de contenu à l'appareil de reproduction de contenu à synchroniser.

11. Procédé selon les revendications 7, 8, 9 ou 10, dans lequel la synchronisation des métadonnées comprend les étapes consistant à :
ajouter un emplacement où le fichier de contenu synchronisé est nouvellement stocké au niveau de métadonnées pour le fichier de contenu synchronisé ; et
transmettre les métadonnées où l'emplacement est ajouté à l'appareil de reproduction de contenu à synchroniser.

12. Procédé selon l'une quelconque des revendications précédentes, dans lequel, si les informations concernant les contenus stockés dans l'appareil de reproduction de contenu changent, l'appareil de reproduction de contenu génère un évènement de changement d'informations de contenu.

13. Dispositif pour gérer des contenus distribués, comprenant :
un processeur (110) de base de données (DB) d'informations de contenu qui rassemble des informations concernant des contenus stockés dans un appareil de reproduction de contenu et qui crée ou met à jour une base de données d'informations de contenu intégrée ; et
un processeur de synchronisation (120) qui procède à une synchronisation de contenu pour rendre les données concernant les contenus stockées dans l'appareil de reproduction de contenu conformes à une liste de synchronisation définie par un utilisateur, à l'aide de la base de données d'informations de contenu intégrée.

14. Dispositif selon la revendication 13, dans lequel le processeur (110) de la base de données DB d'informations de contenu (110) comprend :
une unité de gestion d'appareil (111) qui enregistre des informations concernant l'appareil de reproduction de contenu, si l'appareil de reproduction de contenu est nouvellement connecté à un réseau ; et
un récepteur d'informations de contenu (112) qui reçoit les informations concernant les contenus stockés dans l'appareil de reproduction de contenu depuis l'appareil de reproduction de contenu si l'appareil de reproduction de contenu est nouvellement connecté au réseau.

15. Dispositif selon la revendication 13 ou la revendication 14, dans lequel le processeur (110) de la base de données DB d'informations de contenu comprend :
un récepteur de signal de changement de contenu (113) qui reçoit un signal qui informe d'un changement dans les contenus depuis l'appareil de reproduction de contenu dans lequel le changement se produit ;
un récepteur d'informations de changement de contenu (114) qui reçoit des informations concernant les contenus depuis l'appareil de reproduction de contenu dans lequel le changement se produit ; et
une unité de mise à jour de base de données d'informations de contenu (115) qui met à jour la base de données d'informations de contenu intégrée reflétant les informations concernant les contenus changés.

16. Dispositif selon les revendications 13, 14 ou 15, dans lequel l'appareil de reproduction de contenu est un appareil de reproduction de contenu fixe ou un appareil de reproduction de contenu mobile.

17. Dispositif selon la revendication 16, dans lequel, si l'appareil de reproduction de contenu est l'appareil de reproduction de contenu fixe, l'appareil de reproduction de contenu est connecté à un réseau par l'intermédiaire d'un LAN basé sur le protocole TCP/IP.

18. Dispositif selon la revendication 16, dans lequel, si l'appareil de reproduction de contenu est l'appareil de reproduction de contenu mobile, l'appareil de reproduction de contenu est connecté à un réseau par l'intermédiaire d'un bus série universel (USB) ou d'une interface basée sur une spécification IEEE 1394.

19. Dispositif selon l'une quelconque des revendications 13 à 18, dans lequel le processeur de synchronisation (120) comprend :
une unité de synchronisation de liste de lecture (121) qui procède à une synchronisation de liste de lecture pour rendre les listes de lecture de contenu stockées dans l'appareil de reproduction de contenu conformes à la liste de synchronisation ;
une unité de synchronisation de fichier de contenu (122) qui procède à une synchronisation de fichier de contenu pour rendre les fichiers de contenu stockés dans l'appareil de reproduction de contenu conformes à la liste de lecture synchronisée ; et
une unité de synchronisation de métadonnées (123) qui procède à une synchronisation de métadonnées pour refléter un résultat de la synchronisation du fichier de contenu dans les métadonnées concernant le fichier de contenu synchronisé.

20. Dispositif selon la revendication 19, dans lequel l'unité de synchronisation de liste de lecture (121) comprend :
une unité d'extraction de liste de lecture qui extrait une liste de lecture pour l'appareil de reproduction de contenu à synchroniser, à l'aide de la liste de synchronisation comprenant des listes de lecture provenant des listes de lecture pour les appareils respectifs ; et
une unité de transmission de liste de lecture qui transmet la liste de lecture extraite à l'unité de reproduction de contenu à synchroniser.

21. Dispositif selon la revendication 19 ou la revendication 20, dans lequel l'unité de synchronisation du fichier de contenu (121) comprend :
une unité d'extraction de liste de fichiers de contenu téléchargés qui extrait une liste de fichiers de contenu téléchargés qui sont compris dans la liste de lecture synchronisée et qui ne sont pas stockés dans l'appareil de reproduction de contenu à synchroniser ; et
une unité de transmission de fichier de contenu qui transmet les fichiers de contenu inclus dans la liste des fichiers de contenu téléchargés à l'appareil de reproduction de contenu à synchroniser.

22. Dispositif selon la revendication 21, dans lequel l'unité de transmission de fichiers de contenu téléchargés comprend :
une unité de détermination qui détermine si les fichiers de contenu inclus dans la liste des fichiers de contenu téléchargés sont stockés dans l'appareil de gestion de contenu distribué ;
une unité de détection qui détecte un autre appareil de reproduction de contenu stockant les fichiers de contenu téléchargés qui ne sont pas stockés dans l'unité de gestion de contenu distribué parmi les fichiers de contenu téléchargés ; et
une unité de transmission de message de transfert de fichier qui transmet un message pour faire que l'autre appareil de reproduction de contenu transmette directement les fichiers de contenu téléchargés à l'appareil de reproduction de contenu à synchroniser.

23. Dispositif selon l'une quelconque des revendications 19 à 22, dans lequel l'unité de synchronisation des métadonnées (123) comprend :
une unité d'ajout de métadonnées qui ajoute un emplacement où le fichier de contenu synchronisé est nouvellement stocké au niveau de métadonnées pour le fichier de contenu synchronisé ; et
une unité de transmission de métadonnées qui transmet les métadonnées où l'emplacement est ajouté à l'appareil de reproduction de contenu à synchroniser.

24. Support d'enregistrement lisible par un ordinateur sur lequel est intégré un programme informatique pour exécuter un procédé comprenant les étapes consistant à :
rassembler des informations concernant des contenus stockés dans un appareil de reproduction de contenu et créer ou mettre à jour une base de données d'informations de contenu intégrée ; et
procéder à une synchronisation de contenu pour rendre les données concernant les contenus stockées dans l'appareil de reproduction de contenu conformes à une liste de synchronisation définie par un utilisateur, à l'aide de la base de données d'informations de contenu intégrée.
